# FASCICULE DE BREVET EUROPEEN

(11) **EP 2 796 265 B1**
(45) Date de publication et mention de la délivrance du brevet: **08.07.2020**
(21) Numéro de dépôt: 14001189.1
(22) Date de dépôt: 31.03.2014
(51) Int. Cl.: B29C 35/08, B29C 73/12, B29C 73/30, H05B 6/10, B29C 35/02

(54) **Appareil de réparation par chauffage d'une surface en matériau composite, au moyen d'un organe chauffant "suscepteur" activé localement par une pluralité de bobines d'induction**
Gerät zum Reparieren durch Erhitzung einer Verbundstoffoberfläche mit Hilfe eines Suszeptor-Heizorgans, das lokal über eine Vielzahl von Induktionsspulen aktiviert wird
Apparatus for repairing a composite material by heating, by means of a susceptor heating element activated locally by a plurality of induction coils

(30) Priorité: 24.04.2013 FR 1300955
(43) Date de publication de la demande: 29.10.2014
(73) Titulaire: Airbus Helicopters, 13725 Marignane Cedex (FR)
(72) Inventeur: Brunel, Jean-Evrard, Montreal, Québec H9C 2W8 (CA); Giraud, Kevin, F-13300 Salon DE Provence (FR)
(74) Mandataire: GPI & Associés

(56) Documents cités:
- US-A1- 2012 145 703
- US-A1- 2013 082 047

## Description

La présente invention est du domaine des techniques de façonnage des matériaux composite permettant de réparer par traitement thermique une surface en matériau composite, élément de paroi d'un aéronef notamment.

La présente invention concerne un appareil de traitement thermique d'une surface à réparer issue d'un matériau composite selon la revendication 1 ainsi qu'un procédé de mise en oeuvre de cet appareil selon la revendication 15.

La présente invention relève plus spécifiquement de telles techniques de façonnage mettant en œuvre une couverture munie de moyens d'activation par induction d'un organe chauffant communément qualifié de « suscepteur », afin de provoquer un scellement par polymérisation d'un timbre en matériau composite sur la surface à réparer. Il est communément compris par surface à réparer une surface s'étendant sur une face d'un objet selon un périmètre donné et selon une profondeur donnée suivant une dimension en épaisseur dudit objet considérée transversalement à ladite face, orthogonalement notamment.

Dans le domaine de l'aéronautique, il est commun d'utiliser des matériaux composite pour former des éléments de paroi pour aéronef, telles que des éléments de paroi ménageant l'enveloppe extérieure de l'aéronef. De tels éléments de paroi sont notamment issus d'un matériau composite constitué de fibres de renfort issues d'une matière minérale telle que le verre ou le carbone, les fibres de renfort étant noyées dans une matrice résineuse thermo-fusible ou thermodurcissable.

Les parois d'un aéronef formées à partir d'un tel matériau composite présentent les avantages d'être globalement robustes et néanmoins légères, et de permettre une intégration aisée dans les parois d'un grillage métallique formant un bouclier électrostatique préservant l'aéronef de charges électriques extérieures auquel il est potentiellement soumis, telles que la foudre.

Cependant, de telles parois sont sujettes à des dégradations de surface qu'il est nécessaire de réparer. A cet effet, il est habituel d'apposer contre la surface à réparer un timbre en matériau composite puis de porter à température la surface à réparer couverte par le timbre pour obtenir par polymérisation un scellement du timbre sur la surface à réparer.

Pour faciliter la réparation, il est courant d'utiliser des couvertures chauffantes placées sur la surface à réparer. De telles couvertures chauffantes présentent les avantages d'être souples pour épouser au mieux la surface à réparer, d'être facilement manipulables par un opérateur et d'être aisément transportables vers un site d'intervention.

Parmi de telles couvertures chauffantes, il est plus particulièrement connu celles formées d'une nappe souple intégrant des moyens d'activation par induction d'un organe chauffant communément qualifié de « suscepteur » apte à porter à température la surface à réparer par conduction ou par convection. La nappe souple intègre en superposition les moyens d'activation et l'organe chauffant « suscepteur ». L'énergie produite par un champ électromagnétique généré par les moyens d'activation est convertie en chaleur par l'organe chauffant « suscepteur » pour chauffer la surface à réparer.

Plus particulièrement, les moyens d'activation sont communément formés d'une bobine inductive alimentée en courant électrique par une source d'énergie électrique extérieure. L'organe chauffant « suscepteur » est issu ou intègre un matériau « suscepteur » apte à absorber l'énergie électromagnétique générée par la bobine inductive et à convertir cette énergie électromagnétique en chaleur. La chaleur produite par l'organe chauffant « suscepteur » est exploitée pour porter à température la surface à réparer afin de sceller par polymérisation le timbre sur la surface à réparer.

Il est commun d'utiliser un organe chauffant «suscepteur» formé d'une couche de graphite procurant les avantages d'être résistante et pérenne, et de pouvoir supporter des températures pouvant être très élevées. Il est aussi connu de former des organes chauffant « suscepteurs » à partir de matériaux électriquement conducteurs à base de particules magnétiques noyées dans un substrat, ou encore à base d'acier inoxydable, de carbure de silicium ou d'aluminium, voire d'une manière générale de tout autre matériau électriquement conducteur.

La couverture est par ailleurs équipée de moyens de plaquage aptes à la maintenir contre la surface à réparer, tel que typiquement des moyens à dépression. De tels moyens à dépression mettent couramment en oeuvre un sac à vide coiffant la couverture chauffante et une couche drainante intégrée à la couverture chauffante pour la contraindre à épouser la surface à réparer.

Pour connaître un environnement technologique proche de la présente invention, on pourra par exemple se reporter aux documents US 6 884 975 (BOEING CO.), US 8 330 086 (BOEING CO.) et US2008/128078 (BOEING CO.) qui décrivent des couvertures chauffantes intégrant une bobine inductive et un organe chauffant « suscepteur » exploité pour chauffer une surface à réparer en matériau composite.

La qualité et la fiabilité de la réparation effectuée sont dépendantes de la température de chauffe de la surface à réparer et de la diffusion de la chaleur à son travers. La couverture doit être organisée pour obtenir un chauffage adapté de la surface à réparer tout en évitant son endommagement.

Plus particulièrement, il est nécessaire d'obtenir un chauffage de la surface à réparer à une température de consigne propre à polymériser le timbre et/ou la surface à réparer procurant leur le scellement du timbre en évitant cependant une surchauffe de la surface à réparer pouvant la détériorer.

En outre, la surface à réparer doit être portée à température avec une répartition de la chaleur à son travers la plus homogène possible. Or, la surface à réparer est potentiellement thermiquement hétérogène en raison notamment de variations localisées de sa masse et/ou en raison de la présence d'éléments métalliques couramment intégrés dans la masse de l'objet dont la surface est à réparer. Il en ressort que la surface à réparer présente potentiellement des zones de déperdition de chaleur et/ou des puits de chaleur néfastes à l'obtention d'une répartition homogène de la chaleur à son travers.

Par exemple selon le document US 6 884 975, la couverture intègre un appareillage à circulation de fluide pour maintenir la température de chauffe de la surface à réparer à une température de consigne. L'organe chauffant « suscepteur » est formé d'une plaque hétérogène procurant un chauffage localisé à différentes températures de la surface à réparer.

Par exemple encore, le document US 8 330 086 exploite la nappe flexible que comporte la couverture comme diffuseur de la chaleur produite par l'organe chauffant « suscepteur », afin d'homogénéiser la transmission de la chaleur sur la surface à réparer.

Par exemple encore, le document US 2008/128078 propose d'utiliser un organe chauffant « suscepteur » formé d'un granulat de particules magnétiques noyées dans un substrat procurant une diffusion homogène sur la surface à réparer de la chaleur produite par l'organe chauffant « suscepteur ».

De telles modalités de chauffage de la surface à réparer méritent d'être améliorées, notamment vis-à-vis de l'obtention d'un chauffage localisé de la surface à réparer à différentes températures selon ses caractéristiques propres vis-à-vis de la diffusion de la chaleur à son travers.

A cet effet, il a été proposé par les documents US2012/145703 (MATSEN M.R.) et US2013/0082047 (MATSEN M.R.) de doter la couverture de moyens de chauffage associant un câble électriquement conducteur et des manchons « suscepteurs » successivement disposés le long et autour du câble. Le câble est replié sur lui-même pour couvrir une surface de dimension souhaitée correspondante à une surface à réparer et est alimenté en courant alternatif pour générer un champ magnétique activant les manchons « suscepteurs » qui produisent alors de la chaleur. Lorsque les manchons « suscepteurs » atteignent individuellement leur température de Curie, les manchons « suscepteurs » cessent alors de générer de la chaleur.

Ces dispositions sont telles que la surface à réparer peut être globalement portée à une température homogène par chauffage localisé de sa surface et cela y compris dans le cas où la structure à réparer est hétérogène, notamment en raison de la présence éventuelle de puits de chaleur.

Dans le contexte d'une application à la réparation d'une surface d'une paroi d'aéronef, il est souhaitable qu'une même couverture puisse être utilisée pour de quelconques surfaces à réparer. Il est opportun que l'organisation de la couverture procure de manière fiable et précise une répartition homogène de la chaleur à travers une quelconque surface à réparer, notamment sans préjuger de son hétérogénéité vis-à-vis de son aptitude à diffuser la chaleur à son travers et sans préjuger de la nature thermo-fusible ou thermodurcissable du matériau composite dont elle est issue.

Il est en outre opportun que la faculté offerte de pouvoir obtenir une répartition homogène de la chaleur à travers une quelconque surface à réparer, ne fasse pas obstacle à la possibilité d'obtenir une répartition de la chaleur à travers une surface à réparer à des températures pouvant être localement différentes.

De telles contraintes de perfectionnement s'inscrivent de surcroît dans le cadre d'une recherche d'une couverture dont l'organisation permet de réduire au mieux ses coûts d'obtention. Il est aussi essentiel que la couverture chauffante puisse être facilement transportée vers un quelconque site d'intervention et qu'elle puisse être rapidement et aisément mise en oeuvre quelle que soit la surface à réparer. Une telle démarche de réparation doit pouvoir être effectuée simplement et rapidement dans le cadre potentiel d'une réparation temporaire, dans l'attente d'une réparation définitive effectuée en atelier avec un outillage spécifique.

Le but de la présente invention est de proposer un appareil de réparation par chauffage d'une surface en matériau composite du type comportant une couverture munie de moyens d'activation par induction d'un organe chauffant « suscepteur » chauffant la surface à réparer.

La présente invention vise plus particulièrement à proposer un tel appareil apte à procurer une répartition précise à une température de consigne de la chaleur à travers une quelconque surface à réparer en matériau composite, dans le cadre des contraintes précédemment mentionnées. Une telle répartition de la chaleur est essentiellement souhaitée pouvoir être obtenue homogène à travers la surface à réparer, tout en permettant au besoin de procurer avec précision une répartition de la chaleur à travers la surface à réparer à des températures localisées de valeurs respectives.

Il est notamment recherché de proposer un tel appareil pouvant être exploité sans préjuger de l'éventuelle hétérogénéité de la surface à réparer vis-à-vis de son aptitude à diffuser la chaleur à son travers et sans préjuger de la nature thermo-fusible ou thermodurcissable de la résine du matériau composite dont la surface à réparer est issue.

Notamment encore, l'appareil de la présente invention est plus particulièrement recherché adapté à la réparation d'une surface dans le cadre spécifique de la réparation d'une paroi d'un aéronef formant son enveloppe extérieure, sans toutefois qu'une telle recherche soit considérée exclusive de potentielles autres utilisations de l'appareil pour réparer toute autre surface en matériau composite.

L'appareil de la présente invention est un appareil de traitement thermique d'une surface à réparer issue d'un matériau composite. Un tel matériau composite est typiquement formé de fibres de renfort noyées dans une matrice résineuse. Les fibres de renfort sont indifféremment continues ou discontinues et sont notamment issues d'une matière minérale telle que le verre ou le carbone par exemple.

L'appareil comprend une couverture équipée de moyens de plaquage de la couverture en appui contre la surface à réparer. Selon une forme commune de réalisation mentionnée à titre d'exemple, les moyens de plaquage sont des moyens du type à dépression.

De tels moyens de plaquage associent typiquement un sac à vide équipant la couverture, un tel sac à vide est notamment formé d'une coiffe couvant une nappe flexible que comporte la couverture. Par ailleurs, la couverture et plus spécifiquement la nappe flexible intègre un tissu drainant en relation avec un générateur de dépression. Dans ce cas courant, la couverture comprend typiquement ladite nappe flexible coiffée du sac à vide et munie du tissu drainant.

La couverture, et plus spécifiquement la nappe flexible, intègre un organe générateur d'au moins un champ électromagnétique sous l'effet d'une circulation à son travers d'un courant électrique. A cet effet, l'appareil comprend une source d'énergie électrique génératrice dudit courant électrique acheminé vers ledit organe générateur d'au moins un champ électromagnétique. Classiquement, la source d'énergie électrique est placée à distance de la couverture et une liaison filaire les relie l'une à l'autre.

La couverture, et plus spécifiquement la nappe flexible, intègre encore une pluralité de capteurs de température chacun aptes à fournir des mesures respectives de la température prises localement sur la surface à réparer.

L'appareil comprend aussi un organe chauffant « suscepteur » intégrant un matériau « suscepteur ». Un tel matériau « suscepteur » est réputé être un matériau apte à absorber l'énergie électromagnétique générée par ledit organe générateur d'au moins un champ électromagnétique et à convertir en chaleur l'énergie électromagnétique absorbée.

L'appareil comprend aussi au moins un timbre issu d'un matériau composite et dédié à être scellé par polymérisation sur la surface à réparer, en conséquence du chauffage de la surface à réparer.

Il est évidemment compris que le timbre est un élément perdu après utilisation de l'appareil pour réparer une surface donnée. Il est aussi évidemment à considérer que la notion de chauffage de la surface à réparer est une opération de chauffage de la surface à réparer sur laquelle est préalablement apposé le timbre.

Selon la présente invention, l'appareil est principalement reconnaissable en ce que l'organe générateur d'un dit au moins un champ électromagnétique comprend au moins une pluralité de bobines inductives rassemblées sur un support commun intégré à la couverture. Le support est muni de ladite pluralité de capteurs de température répartis sur le support. L'appareil comporte en outre des moyens de régulation de la puissance de dits courants électriques alimentant individuellement et sélectivement à une puissance électrique individuelle les bobines inductives selon les mesures de température fournies par les capteurs de température.

La globalisation d'une implantation de plusieurs bobines inductives sur un même support facilite leur intégration à la couverture et la faculté de disposer d'un nombre conséquent de bobines inductives pouvant couvrir une vaste surface en étant sélectivement exploitées selon l'étendue effective de la surface à réparer devant être couverte par l'organe générateur d'un dit au moins un champ électromagnétique.

Par ailleurs, l'organe générateur d'un dit au moins un champ électromagnétique intègre avantageusement les capteurs de température dédiés à la mesure de la température localement diffusée dans la surface à réparer. L'implantation des capteurs de température vis-à-vis de la surface à réparer leur conférant une aptitude à effectuer de telles mesures de température localisées est facilitée par l'utilisation du support sur lequel sont rassemblées les bobines inductives.

Outre ces avantages procurés par l'organisation structurelle propre et inhabituelle de l'organe générateur d'un dit au moins un champ électromagnétique, la génération individuelle d'un champ électromagnétique par chacune des bobines inductives est régulée selon la température effectivement diffusée dans la surface à réparer dans des zones respectivement couvertes par les bobines inductives. De telles dispositions sont obtenues par la répartition sur le support des capteurs de température pouvant être notamment réalisée en concordance avec la répartition des bobines inductives sur le support en affectant un ou plusieurs capteurs de température à la régulation du champ électromagnétique généré par une ou plusieurs bobines inductives.

Quelles que soient les caractéristiques propres de la surface à réparer à diffuser la chaleur dans sa masse, l'appareil est apte à chauffer localement la surface à réparer par l'activation sélective des bobines inductives et par la régulation des champs électromagnétiques respectivement générés par les bobines inductives.

Ces dispositions permettent de chauffer localement la surface à réparer par l'organe chauffant « suscepteur » soumis localement aux dits champs électromagnétiques en fonction des mesures de température effectuées par les capteurs de température.

Grâce à ces dispositions, la diffusion de la chaleur dans la surface à réparer peut être contrôlée pour être homogène et/ou selon les besoins pour obtenir une montée en température de la surface à réparer pouvant être localement portée à différentes températures. La diffusion de la chaleur dans la surface à réparer est contrôlée par lesdites mesures de température qui peuvent être d'une valeur identique ou être de valeurs respectives de l'un à l'autre des capteurs de température en fonction de la régulation souhaitée du fonctionnement des bobines inductives et de l'obtention recherchée d'une diffusion de la chaleur dans la surface à réparer homogène ou localement différentiée.

En outre, le chauffage localisé de la surface à réparer par l'organe chauffant « suscepteur » soumis localement aux dits champs électromagnétiques peut être effectué à température modéré juste suffisante pour obtenir la polymérisation du timbre, ce qui permet d'éviter une dégradation de la surface à réparer pouvant être générée par son chauffage à une température globale excessive localement indifférenciée.

Par ailleurs dans le cadre d'une réparation temporaire, le timbre peut être partiellement vulcanisé, notamment à son pourtour, pour provoquer son scellement périphérique sur la surface à réparer afin de la préserver au mieux dans l'attente d'une réparation définitive et pérenne en atelier avec un outillage spécifique plus performant.

L'appareil de la présente invention est en outre apte à être exploité pour la réparation d'une surface à réparer au moyen d'un timbre issu d'un matériau thermoplastique fusible à hautes températures, tel que le PolyEtherEtherKetone (PEEK) par exemple, fusible à une température de l'ordre de 400°C.

Par ailleurs, l'organe chauffant « suscepteur » peut être de structure quelconque dès lors que le matériau « suscepteur » qu'il intègre est réparti équitablement en couverture de la surface à réparer.

Par ailleurs encore, l'organe chauffant « suscepteur » peut être dissocié de la couverture en étant avantageusement intégré au timbre et/ou rapporté sur le timbre de manière amovible après scellement du timbre sur la surface à réparer.

Une telle dissociation entre la couverture et l'organe chauffant « suscepteur » permet de déterminer librement selon les besoins l'étendue de la surface productrice de chaleur couvrant la surface à réparer. En effet, l'étendue de la surface produisant de la chaleur sur la surface à réparer est délimitée par la surface globale délimitée par de l'organe chauffant « suscepteur », qui peut alors être choisie selon les besoins et notamment selon l'étendue propre de la surface à réparer, et cela indépendamment et distinctement de l'étendue de la surface globale de la couverture couvrant potentiellement la surface à réparer et notamment indépendamment et distinctement de l'étendue de la surface délimitée globalement par les bobines et les capteurs de température intégrés à la couverture.

Dans le cadre d'une intégration de l'organe chauffant « suscepteur » au timbre, l'organe chauffant « suscepteur » peut-être avantageusement formé d'un grillage métallique apte à former un bouclier électrostatique après scellement du timbre sur la surface à réparer. L'intégration de l'organe chauffant « suscepteur » au timbre est notamment mise en œuvre dans le cas où la surface à réparer est une surface d'une face extérieure d'une paroi d'enveloppe d'un aéronef. Cette spécificité d'application de l'appareil rend néanmoins possible son utilisation pour d'autres applications.

L'apport de l'organe chauffant « suscepteur » au timbre est potentiellement réalisée par fixation de l'organe chauffant « suscepteur » au timbre par l'intermédiaire de moyens de fixation facilement réversible pour permettre une installation et inversement un retrait aisés de l'organe chauffant « suscepteur » selon les besoins. Dans ce cas, l'organe chauffant « suscepteur » peut être choisi d'une structure mettant en oeuvre un quelconque substrat doté d'un quelconque matériau « suscepteur ».

Un tel agencement du timbre muni d'un organe chauffant « suscepteur » amovible permet de faciliter une réparation d'urgence temporaire de la surface à réparer sur un quelconque site au moyen d'un timbre issu d'un matériau thermoplastique, dans l'attente d'une réparation pérenne et mieux adaptée effectuée en atelier au moyen d'un outillage spécifique plus performant.

Il en ressort que l'appareil de l'invention est apte à être utilisable pour une quelconque surface à réparer. Plus particulièrement, le caractère quelconque de la surface à réparer est notamment à apprécier au regard :
-) de l'étendue et de la conformation de la surface à réparer,
-) des facultés propres de la surface à réparer à diffuser la chaleur qu'elle reçoit de l'organe chauffant « suscepteur »,
-) de la faculté offerte de mettre en œuvre un organe chauffant « suscepteur » intégrant un matériau « suscepteur » réparti équitablement sur une quelconque surface à réparer, sans affecter la possibilité de chauffer localement une quelconque surface à réparer à des températures différentes, et
-) de la faculté offerte de mettre en œuvre un organe chauffant « suscepteur » placé en superposition de la surface à réparer selon de quelconques modalités, notamment par intégration de l'organe chauffant « suscepteur » au timbre. Ladite intégration est par exemple une intégration perdurant après scellement du timbre sur la surface à réparer dans le cas avantageux où l'organe chauffant « suscepteur » forme un bouclier électrostatique, ou par exemple encore est potentiellement un apport temporaire de l'organe chauffant « suscepteur » qui retiré après scellement du timbre sur la surface à réparer..

On comprendra que la notion de pluralité tant concernant les bobines inductives que concernant les capteurs de température est évidemment à considérer comme étant un nombre au moins égal à deux.

Il est aussi évidemment compris que le nombre de bobines inductives et le nombre de capteurs de température sont potentiellement différents. Plus particulièrement, un ou plusieurs capteurs de température sont potentiellement affectés à la régulation du fonctionnement d'une ou de plusieurs bobines inductives avantageusement rassemblées sur un même support en un groupe de bobines inductives.

Il est aussi à considérer que l'organe générateur dudit au moins champ électromagnétique est potentiellement composé de plusieurs dites pluralité de bobines inductives rassemblées sur des supports communs respectifs.

Plus particulièrement et selon une forme spécifique de réalisation, les bobines inductives sont rassemblées par groupes de bobines inductives répartis sur le support. Au moins un capteur de température est affecté à un groupe de bobines inductives pour réguler leur fonctionnement. Les bobines inductives sont individuellement alimentées par un courant électrique de même puissance de l'une à l'autre des bobines inductives d'un même groupe selon les mesures de température fournies par ledit au moins un capteur de température affecté au dit même groupe.

Il est évidemment compris que l'alimentation individuelle des bobines inductives d'un même groupe est potentiellement réalisée conjointement depuis un circuit d'acheminement commun du courant électrique utilisé pour leur alimentation individuelle.

Ces dispositions permettent de couvrir une surface étendue de la surface à réparer chauffée par un même groupe de bobines inductives. Des zones spécifiques de l'organe chauffant « suscepteur » peuvent être individuellement chauffées par une pluralité de bobines inductives dont les tailles individuelles sont réduites au mieux.

Par ailleurs, la conformation géométrique et l'étendue des dites zones spécifiques peuvent être librement définies selon le nombre et la disposition les unes par rapport aux autres des bobines inductives d'un même groupe et selon le nombre de groupes de bobines inductives intégrés au support.

Les groupes de bobines inductives et les capteurs de température respectivement affectés aux groupes de bobines inductives sont potentiellement rassemblés en au moins un lot. Un même dit lot comprend un groupe médian de bobines inductives et des groupes périphériques de bobines inductives bordant le groupe médian de bobines inductives respectivement à chacun de ses côtés.

Selon l'étendue souhaitée du support, plusieurs lots peuvent être implantés sur un même support. De même, selon l'étendue de la couverture, un ou plusieurs lots peuvent être implantés sur un même support ou sur des supports respectifs.

Les bobines inductives sont de préférence réparties sur le support en étant disposées en quinconce dans le plan général du support. A titre indicatif, le diamètre des bobines inductives est compris entre 25 mm et 50 mm. On relèvera que le diamètre des bobines inductives est à apprécier vis-à-vis d'un compromis entre une dimension des bobines inductives souhaitée la plus faible possible et leur rendement thermique.

On notera que la notion de diamètre ne doit pas être comprise au sens strict du terme, l'enroulement des bobines inductives étant potentiellement effectué suivant une configuration géométrique polygonale. Dans ce cas, la notion de diamètre est à transposer en notion de diagonale considérée entre deux angles opposés du polygone formé par l'enroulement ou en notion de distance de séparation entre un angle et un bord opposé d'un dit polygone.

Selon une forme préférée de réalisation, le support est constitué d'un film en matériau électriquement isolant tel qu'un film à base d'imide. Le film est porteur de dits capteurs de température et intègre un circuit électronique formant les bobines inductives et des chemins de conduction électrique dédiés à la mise en relation des bobines inductives et des capteurs de température avec les moyens de régulation.

Selon une autre forme de réalisation, le support est constitué d'une nappe souple formée d'une masse de résine électriquement isolante, tel qu'à base de silicone. Les bobines inductives, les capteurs de température et des câbles de conduction électrique sont noyés dans la masse de résine. Les câbles de conduction électrique sont dédiés à la mise en relation des bobines inductives et des capteurs de température avec les moyens de régulation.

Dans ce cas, les bobines inductives et les câbles sont de préférence chacun formés par des fils composés chacun de brins individuellement isolés électriquement et tressés entre eux, tels que des fils de Liz, les fils étant aptes à acheminer un courant électrique à haute fréquence.

Tel que précédemment mentionné, l'organe chauffant « suscepteur » intègre avantageusement un matériau « suscepteur » régulièrement réparti dans sa masse.

Par exemple et selon une forme de réalisation, l'organe chauffant « suscepteur » est un composant consommable à usage unique formé d'un grillage métallique non tissé à mailles régulières intégré au timbre. Un tel grillage métallique est apte à former un bouclier électrostatique après intégration du timbre à la surface à réparer, notamment dans le cadre d'une utilisation de l'appareil à la réparation d'une surface d'une paroi d'enveloppe extérieure d'un aéronef.

Par exemple encore et selon une autre forme de réalisation, l'organe chauffant « suscepteur » est monté amovible sur le timbre par l'intermédiaire de moyens de fixation facilement réversible en procurant la faculté de son retrait aisé après scellement du timbre sur la surface à réparer. Dans ce cas, l'organe chauffant « suscepteur » peut être indifféremment formé d'un grillage métallique à mailles régulières, d'un substrat intégrant des particules magnétiques équitablement réparties dans le substrat ou d'une plaque métallique homogène.

Par exemple, l'organe chauffant « suscepteur » peut être avantageusement formé d'un substrat agencé en feuille intégrant le matériau « suscepteur » équitablement réparti sur l'une des grandes faces de la feuille. L'autre grande face de la feuille est munie d'un revêtement adhésif procurant une fixation de la feuille sur le timbre et autorisant un retrait aisé de la feuille après scellement du timbre sur la surface à réparer.

Selon une forme préférée de réalisation, l'appareil comporte des moyens d'édition indifféremment par voie d'affichage et/ou par voie d'impression d'informations relatives aux mesures fournies par les capteurs de température. De tels moyens d'édition permettent à un opérateur de surveiller le chauffage de la surface à réparer, voire et de préférence aussi d'intervenir sur le fonctionnement des bobines inductives.

A cet effet, l'appareil comporte de préférence des moyens de commande par un opérateur de la mise en œuvre individuelle des bobines inductives en substitution et/ou en complément des moyens de régulation. Les moyens de commande peuvent en outre être exploités pour inhiber le fonctionnement d'au moins une bobine inductive en cas d'une étendue de la surface à réparer plus faible que l'étendue de l'organe générateur de champs magnétiques ou en cas d'un scellement du timbre sur la surface à réparer recherché localisé, tel que seulement en périphérie du timbre, dans le cadre notamment d'une réparation d'urgence temporaire.

La présente invention a aussi pour objet un procédé de mise en œuvre d'un appareil tel qu'il vient d'être décrit. Le procédé de la présente invention comprend les opérations suivantes :
-) installer par un opérateur le timbre sur la surface à réparer et la couverture en superposition du timbre et de la surface à réparer, puis mettre en œuvre les moyens de plaquage pour contraindre la couverture à épouser la forme de la surface à réparer.
-) alimenter en courant électrique chacune des bobines inductives à une même puissance électrique de consigne et simultanément mesurer localement la température de la surface à réparer au moyen des capteurs de température.
-) alimenter sélectivement en courant électrique les bobines inductives à une puissance électrique individuelle régulée par les moyens de régulation selon au moins une température de consigne relative à la température à laquelle doit être portée la surface à réparer et selon les mesures fournies par chacun des capteurs de température. La régulation de l'alimentation en courant électrique des bobines inductives est opérée jusqu'à obtention de la polymérisation et d'un scellement du timbre sur la surface à réparer.
-) retirer la couverture après scellement du timbre sur la surface à réparer.

Dans le cas préféré où il est souhaité une diffusion homogène de la chaleur à travers la surface à réparer, les valeurs des mesures effectuées en continu par chacun des capteurs de température tendent à être d'une même valeur correspondant à la valeur d'une température de consigne. Ladite température de consigne est déterminée selon le matériau composite dont sont issus le timbre et/ou la surface à réparer en étant prédéfinie suffisante pour provoquer le scellement du timbre sur la surface à réparer tout en évitant leur endommagement.

Dans le cas marginal où il est souhaité une diffusion hétérogène de la chaleur à travers la surface à réparer, les valeurs des mesures effectuées en continu par chacun des capteurs de température sont des valeurs localement hétérogènes selon des températures de consigne différenciées préalablement identifiées et respectivement affectées à des zones localisées de la surface à réparer.

Des exemples de réalisation de la présente invention vont être décrits en relation avec les figures de la planche annexée, dans laquelle :
- la fig.1 et la fig.2 sont des représentations schématiques d'un appareil de la présente invention selon des formes respectives de réalisation.
- la fig.3 est une représentation schématique d'un exemple de réalisation d'un organe générateur de champs électromagnétiques que comprend un appareil de la présente invention.

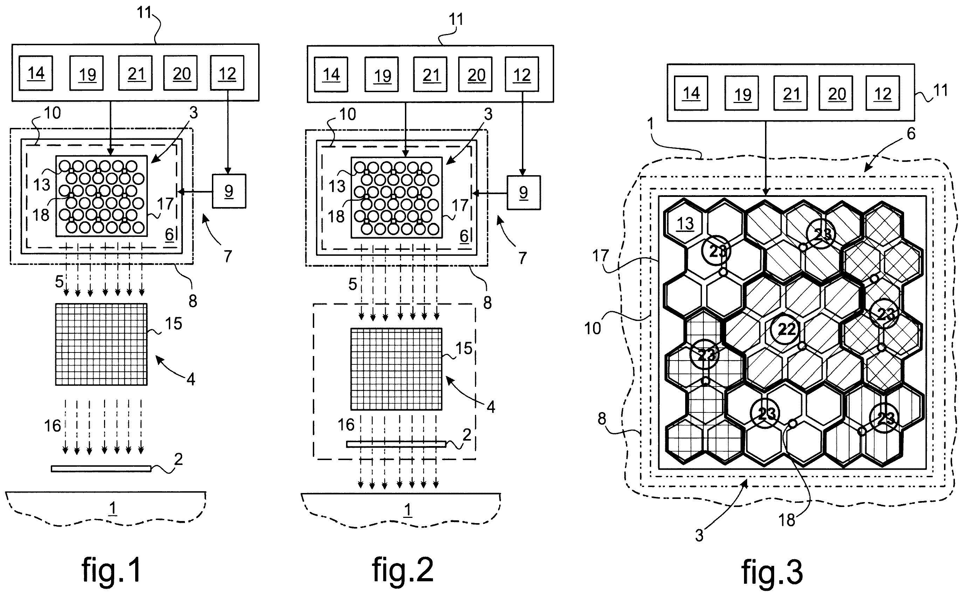

Sur les fig.1 et fig.2, un appareil est organisé pour traiter thermiquement une surface à réparer 1 en matériau composite, par scellement d'un timbre 2 sur la surface à réparer 1. Le timbre 2 et la surface à réparer 1 sont issus d'un matériau composite formé de fibres minérales, telles que de carbone ou de verre, noyées dans une matrice résineuse.

Le timbre 2 est apposé sur la surface à réparer 1. Le timbre 2 et la surface à réparer 1 sont portés à température pour obtenir leur polymérisation afin de sceller le timbre 2 sur la surface à réparer 1 La résine du matériau composite dont sont issus le timbre et la surface à réparer est potentiellement une matière thermodurcissable ou une matière thermo-fusible. A cet effet, l'appareil comporte des moyens de chauffage de la surface à réparer 1 générant de la chaleur à une température de consigne adaptée pour l'obtention de la polymérisation du matériau dont sont issus le timbre 2 et/ou de la surface à réparer 1.

Les moyens de chauffage associent un organe générateur de champs électromagnétiques 3 et un organe chauffant « suscepteur » 4 apte à convertir en chaleur 16 l'énergie électromagnétique produite par l'organe générateur de champs électromagnétiques 3. La chaleur 16 générée par l'organe chauffant « suscepteur » 4 est exploitée pour porter à température le timbre 2 et la surface à réparer 1.

L'organe générateur de champs électromagnétiques 3 et l'organe chauffant « suscepteur » 4 sont chacun de conformations globalement planes et sont placés en superposition l'un par rapport à l'autre dans leur plan général de sorte que l'organe chauffant « suscepteur » 4 soit soumis aux champs magnétiques 5 produits par l'organe générateur de champs électromagnétiques 3. L'organe chauffant « suscepteur » 4 s'étend dans son plan général sur la surface à réparer 1 pour la porter à température. Il est évidemment compris que les mises en superposition successives entre l'organe générateur de champs électromagnétiques 3 et l'organe chauffant « suscepteur » 4 d'une part et entre l'organe chauffant « suscepteur » 4 et la surface à réparer 1 d'autre part, sont potentiellement réalisées en l'absence de contacts directs entre eux.

L'appareil comporte une couverture 6 intégrant au moins l'organe générateur de champs électromagnétiques 3. La couverture 6 est destinée à épouser étroitement la forme de la surface à réparer 1 sur laquelle est apposé le timbre 2 en étant maintenue contre la surface à réparer 1 par des moyens de plaquage 7.

De tels moyens de plaquage 7 sont typiquement des moyens de type à dépression comprenant un sac à vide 8 équipant la couverture 6 et un générateur de dépression 9 en communication aéraulique avec un tissu drainant 10 intégré à la couverture 6. Un boîtier de commande 11 comprend des moyens de contrôle 12 du fonctionnement du générateur de dépression 9.

L'organe générateur de champs électromagnétiques 3 comporte une pluralité de bobines inductives 13 alimentées en courant électrique au moyen d'une source 14 distante génératrice de courant électrique. Une telle source 14 d'énergie électrique est par exemple formée d'une réserve d'énergie électrique et/ou du réseau de distribution collective d'énergie électrique en association avec des moyens de transformation du courant électrique fourni par le réseau de distribution.

Sur les exemples de réalisation illustrés, l'organe chauffant « suscepteur » 4 est formé par un grillage métallique 15 non tissé à mailles régulières. Cependant, L'organe chauffant « suscepteur » 4 est susceptible d'être quelconque dès lors qu'il intègre un matériau « suscepteur » régulièrement réparti dans sa masse.

Il est évidemment compris par répartition régulière une répartition homogène de la masse globale du matériau « suscepteur » suivant l'épaisseur et les dimensions définissant le plan général de l'organe chauffant « suscepteur » 4.

Selon l'exemple de réalisation illustré sur la fig.2, l'organe chauffant « suscepteur » 4 est intégré au timbre 2. L'organe chauffant « suscepteur » 4 est potentiellement un composant consommable à usage unique demeurant intégré à la surface à réparer 1 après scellement du timbre 2. De telles dispositions sont avantageuses dans le cas où l'organe chauffant « suscepteur » 4 est formé d'un grillage apte à ménager un bouclier électrostatique après intégration du timbre 2 à la surface à réparer 1. Selon une autre forme de réalisation non illustrée, l'organe chauffant « suscepteur » 4 est potentiellement rapporté sur le timbre 2 de manière amovible autorisant son retrait aisé après scellement du timbre 2 sur la surface à réparer 1.

Sur les fig.1 à fig.3, l'organe générateur de champs électromagnétiques 3 est constitué d'un support 17 sur lequel sont réparties en quinconce des bobines inductives 13 en pluralité (sur les figures une seule bobine inductive est référencée, les bobines inductives 13 en pluralité étant illustrées par des formes géométriques identiques à la bobine inductive 13 référencée). Le support 17 est par ailleurs porteur de capteurs de température 18 aptes à mesurer localement sur la surface à réparer 1 les températures respectives de différentes zones composant la surface à réparer 1 (de même que pour les bobines inductives 13, un seul capteur de température 18 est référencé sur les figures).

Les différentes zones de la surface à réparer 1 sont localement portées à température par la chaleur produite localement par l'organe chauffant « suscepteur » 4 placé en superposition de la surface à réparer 1.

Il est évidemment compris que lesdites différentes zones de la surface à réparer 1 correspondent aux zones de l'organe chauffant « suscepteur » 4 placées respectivement en superposition desdites différentes zones de la surface à réparer 1.

Un ou plusieurs capteurs de température 18 sont affectés à une ou plusieurs bobines inductives 13 en vue de réguler la puissance du courant les traversant pour doser les quantités d'énergie électromagnétique individuellement générées par les bobines inductives 13. En conséquence, la chaleur générée localement par l'organe chauffant « suscepteur » 4 varie en fonction de l'énergie électromagnétique qu'il reçoit localement depuis les bobines inductives 13 juxtaposées dans le plan général de l'organe générateur de champs électromagnétiques 3.

Les capteurs de température 18 sont en relation avec des moyens de régulation 19 de la puissance des courants électriques traversant individuellement les bobines inductives 13. Il est évidemment compris que les dits moyens de régulation 19 sont interposés entre la source 14 génératrice de courant électrique et l'organe générateur de champs électromagnétiques 3. En fonction des mesures de température prises respectivement par les capteurs de température 18 localement sur la surface à réparer 1, les moyens de régulation 19 contrôlent la puissance des courants électriques individuellement fournis aux bobines inductives 13 pour finalement réguler la quantité d'énergie électromagnétique qu'elles génèrent respectivement.

Grâce à ces dispositions, les moyens de régulation 19 régulent la chaleur localement générée par l'organe chauffant « suscepteur » 4, et en conséquence la chaleur à laquelle est soumise localement la surface à réparer 1. En cas de zones de déperdition de chaleur ou de puits de chaleur présents dans la masse de la surface à réparer 1, l'organe chauffant « suscepteur » 4 génère localement des quantités de chaleur adaptées. Les capteurs de température 18 permettent de mesurer et de réguler spontanément la température à laquelle est soumise la surface à réparer 1 par activation des moyens de régulation 19.

Les moyens de régulation 19 disposent des informations nécessaires fournies par les capteurs de température 18 pour générer localement les quantités de chaleur utiles à l'obtention d'une homogénéisation de la chaleur dissipée à travers la surface à réparer 1, en contrôlant la puissance des courants électriques individuellement fournis aux bobines inductives 13 jusqu'à obtenir des mesures de température homogènes par les différents capteurs de température 18.

Selon les besoins utiles à l'obtention d'une élévation de température de la surface à réparer 1 localement à des températures respectives, les moyens de régulation 19 contrôlent la puissance des courants électriques individuellement fournis aux bobines inductives 13 selon des températures de consigne différenciées de portée à température de zones de la surface à réparer préalablement identifiées.

Le boîtier de commande 11 comporte des moyens d'édition 20 par voire d'affichage d'informations relatives aux mesures de température fournies par les capteurs de température 18. De telles informations permettent à un opérateur de surveiller l'élévation et le maintien en température de la surface à réparer 1, soit à une température homogène soit à des températures localement différenciées dont les valeurs respectives sont contrôlées. L'opérateur peut éventuellement intervenir sur la régulation de l'alimentation individuelle en courant électrique des bobines inductives 13 en exploitant des moyens de commande 21 prévus à cet effet en substitution et/ou en complément de l'exploitation des moyens de régulation 19.

L'organe générateur de champs électromagnétiques 3 est formé d'un composant électronique. Dans ce cas, le support 17 est par exemple formé d'un film, tel qu'un film polyimide par exemple, intégrant un circuit électronique et muni de capteurs de température 18 tels que préférentiellement constitués par des thermistances ou tels que constitués de thermo-résistances par exemple. Le circuit électronique intègre les bobines inductives 13 et divers chemins de conduction dédiés à la mise en relation des bobines inductives 13 et des capteurs de température 18 avec les moyens de régulation 19.

Sur la fig.3, l'organe générateur de champs électromagnétiques 3 comporte des bobines inductives 13 rassemblées par groupes 22, 23 répartis dans le plan général du support 17. Au moins un capteur de température 18 est affecté à un groupe 22,23 donné pour la régulation du courant électrique traversant individuellement les bobines inductives 13 dudit groupe 22, 23 donné. Les bobines inductives 13 d'un même groupe 22, 23 sont alimentées par un courant électrique de même puissance, selon les mesures de température effectuées par le ou les capteurs de température 18 affectés aux bobines inductives 13 d'un dit même groupe 22, 23.

Dans le cas où plusieurs capteurs de température 18 sont affectés à un même groupe 22, 23 de bobines inductives 13, les moyens de régulation 19 calculent une valeur moyenne de température entre les valeurs des mesures respectivement effectuées par les capteurs de température 18 affectés à un même groupe 22, 23 de bobines inductives 13. Ladite valeur moyenne de température est la valeur de température prise en compte par les moyens de régulation pour réguler la puissance du courant électrique traversant les bobines inductives 13 dudit même groupe 22, 23. Il est cependant constaté qu'il est préférable de réduire la taille individuelle des groupes 22, 23 et de leur affecter un capteur de température 18 unique.

Sur l'exemple de réalisation illustré, les différents groupes 22,23 de bobines inductives 13 sont identifiés par un trait d'épaisseur forcé. Un groupe médian 22 de bobines inductives 13 est bordé par une pluralité de groupes périphériques 23 de bobines inductives 13.

Le nombre de bobines inductives 13 composant un même groupe 22,23 est susceptible d'être identique ou de varier d'un groupe 22, 23 à un autre groupe 22, 23. A titre indicatif il est apparu par expérimentation qu'un choix adapté de dimensions des bobines inductives 13 était d'un diamètre compris entre 25 mm et 50 mm pour un nombre de bobines inductives 13 composant un même groupe de bobines inductives compris entre 2 et 15.

A titre illustratif, les groupes 22, 23 de bobines inductives 13 sont représentés hachurés selon une densité de hachures différente d'un groupe 22,23 à un autre groupe 22,23. Une telle différence de densité de hachures est illustrative de la chaleur pouvant être diffusée localement vers la surface à réparer 1 par l'organe chauffant « suscepteur » 4 selon la puissance du courant électrique traversant les bobines inductives 13 composant les différents groupes 22, 23 de bobines inductives 13.

Selon la surface d'extension de l'organe chauffant « suscepteur » 4 devant être couverte par l'organe générateur de champs électromagnétiques 3, plusieurs lots de groupes 22, 23 de bobines inductives 13 peuvent être juxtaposés dans le plan général de l'organe générateur de champs électromagnétiques 3. Différents lots peuvent être identiques ou comporter un agencement et une répartition spécifiques des groupes 22, 23 de bobines inductives 13 qu'ils comprennent individuellement.

## Revendications

1. Appareil de traitement thermique d'une surface à réparer (1) issue d'un matériau composite, ledit appareil comprenant :
-) une couverture (6) équipée de moyens de plaquage (7) de la couverture (6) en appui contre la surface à réparer (1), la couverture (6) intégrant un organe générateur d'au moins un champ électromagnétique (3) sous l'effet d'une circulation à son travers d'un courant électrique et une pluralité de capteurs de température (18) chacun aptes à fournir des mesures respectives de la température prises localement sur la surface à réparer (1),
-) une source (14) d'énergie électrique génératrice dudit courant électrique acheminé vers ledit organe générateur d'au moins un champ électromagnétique (3),
-) un organe chauffant suscepteur (4) intégrant un matériau « suscepteur » apte à absorber l'énergie électromagnétique générée par ledit organe générateur d'au moins un champ électromagnétique (3) et à convertir en chaleur l'énergie électromagnétique absorbée,
-) au moins un timbre (2) issu d'un matériau composite et dédié à être scellé par polymérisation sur la surface à réparer (1), **caractérisé en ce que** l'organe générateur d'un dit au moins un champ électromagnétique (3) comprend au moins une pluralité de bobines inductives (13) rassemblées sur un support (17) commun intégré à la couverture (6) et muni de ladite pluralité de capteurs de température (18) répartis sur le support (17), l'appareil comportant des moyens de régulation (19) de la puissance de dits courants électriques alimentant individuellement et sélectivement à une puissance électrique individuelle les bobines inductives (13) selon les mesures de température fournies par les capteurs de température (18).

2. Appareil selon la revendication 1,
**caractérisé en ce que** les bobines inductives (13) sont rassemblées par groupes (22, 23) de bobines inductives (13) répartis sur le support (17), au moins un capteur de température (18) étant affecté à un groupe (22, 23) de bobines inductives (13) individuellement alimentées par un courant électrique de même puissance de l'une à l'autre des bobines inductives (13) d'un même groupe (22, 23) selon les mesures de température fournies par ledit au moins un capteur de température (18) affecté au dit même groupe (22,23).

3. Appareil selon la revendication 2,
**caractérisé en ce que** les groupes (22, 23) de bobines inductives (13) et les capteurs de température (18) respectivement affectés aux groupes (22, 23) de bobines inductives (13) sont rassemblés en au moins un lot comprenant un groupe médian (22) de bobines inductives (13) et des groupes périphériques (23) de bobines inductives (13) bordant le groupe médian (22) de bobines inductives (13) respectivement à chacun de ses côtés.

4. Appareil selon l'une quelconque des revendications 1 à 3,
**caractérisé en ce que** les bobines inductives (13) sont réparties sur le support (17) en étant disposées en quinconce dans le plan général du support (17).

5. Appareil selon l'une quelconque des revendications 1 à 4,
**caractérisé en ce que** le diamètre des bobines inductives (13) est compris entre 25 mm et 50 mm.

6. Appareil selon l'une quelconque des revendications 1 à 5,
**caractérisé en ce que** le support (17) est constitué d'un film en matériau électriquement isolant, le film étant porteur de dits capteurs de température (18) et intégrant un circuit électronique formant les bobines inductives (13) et des chemins de conduction dédiés à la mise en relation des bobines inductives (13) et des capteurs de température (18) avec les moyens de régulation (19).

7. Appareil selon l'une quelconque des revendications 1 à 5, **caractérisé en ce que** le support (17) est constitué d'une nappe souple formée d'une masse de résine électriquement isolante dans laquelle masse de résine sont noyés les bobines inductives (13), les capteurs de température (18) et des câbles de conduction électrique, lesdits câbles étant dédiés à la mise en relation distante des bobines inductives (13) et des capteurs de température (18) avec les moyens de régulation (19).

8. Appareil selon la revendication 7,
**caractérisé en ce que** les bobines inductives (13) et les câbles sont chacun formés par des fils composés chacun de brins individuellement isolés électriquement et tressés entre eux, les fils étant aptes à acheminer un courant électrique à haute fréquence.

9. Appareil selon l'une quelconque des revendications 1 à 8, **caractérisé en ce que** l'organe chauffant suscepteur (4) intègre un matériau suscepteur régulièrement réparti dans sa masse.

10. Appareil selon l'une quelconque des revendications 1 à 9, **caractérisé en ce que** l'organe chauffant suscepteur (4) est un composant consommable à usage unique formé d'un grillage métallique (15) non tissé à mailles régulières intégré au timbre (2) et apte à former un bouclier électrostatique après intégration à la surface à réparer (1).

11. Appareil selon l'une quelconque des revendications 1 à 9, **caractérisé en ce que** l'organe chauffant suscepteur (4) est monté amovible sur le timbre par l'intermédiaire de moyens de fixation facilement réversible, l'organe chauffant suscepteur (4) étant indifféremment formé d'un grillage métallique à mailles régulières, d'un substrat intégrant des particules magnétiques équitablement réparties dans le substrat ou d'une plaque métallique homogène.

12. Appareil selon la revendication 11,
**caractérisé en ce que** l'organe chauffant suscepteur (4) est formé d'un substrat agencé en feuille intégrant le matériau suscepteur équitablement réparti sur l'une des grandes faces de la feuille, l'autre grande face de la feuille étant munie d'un revêtement adhésif procurant une fixation de la feuille sur le timbre (2) et autorisant un retrait aisé de la feuille après scellement du timbre (2) sur la surface à réparer (1).

13. Appareil selon l'une quelconque des revendications 1 à 12, **caractérisé en ce que** l'appareil comporte des moyens d'édition (20) d'informations relatives aux mesures fournies par les capteurs de température (18) et des moyens de commande (21) par un opérateur de la mise en oeuvre individuelle des bobines inductives (13) en substitution des moyens de régulation (19).

14. Appareil selon l'une quelconque des revendications 1 à 13, **caractérisé en ce que** les moyens de plaquage (7) sont des moyens du type à dépression associant un sac à vide (8) équipant la couverture (6) et un tissu drainant (10) intégré à la couverture (6), le tissu drainant (10) étant en relation avec un générateur de dépression (9).

15. Procédé de mise en œuvre d'un appareil selon l'une quelconque des revendications 1 à 14,
**caractérisé en ce que** le procédé comprend les opérations suivantes :
-) installer par un opérateur le timbre (2) sur la surface à réparer (1) et la couverture (6) en superposition du timbre (2) et de la surface à réparer (1), puis mettre en œuvre les moyens de plaquage (8, 9, 10) pour contraindre la couverture (6) à épouser la surface à réparer (1),
-) alimenter en courant électrique chacune des bobines inductives (13) à une même puissance électrique de consigne et simultanément mesurer localement la température de la surface à réparer (1) au moyen des capteurs de température (18), puis
-) alimenter sélectivement en courant électrique les bobines inductives (13) à une puissance électrique individuelle régulée par les moyens de régulation (19) selon au moins une température de consigne relative à la température à laquelle doit être portée la surface à réparer (1) et selon les mesures fournies par chacun des capteurs de température (18) jusqu'à obtention d'une polymérisation et d'un scellement du timbre (2) sur la surface à réparer (1).
-) retirer la couverture (6) après scellement du timbre (2) sur la surface à réparer (1).

## Patentansprüche

1. Vorrichtung zur Wärmebehandlung einer zu reparierenden, aus einem Verbundwerkstoff hergestellten Oberfläche (1), wobei die Vorrichtung umfasst:
-) eine Abdeckung (6), die mit Mitteln (7) zum flächigen Andrücken der Abdeckung (6) an die zu reparierende Oberfläche (1) versehen ist, wobei die Abdeckung (6) ein Element, das unter der Wirkung eines durch es fließenden elektrischen Stroms mindestens ein elektromagnetisches Feld (3) erzeugt, und eine Mehrzahl von Temperatursensoren (18) aufweist, von denen jeder in der Lage ist, entsprechende, lokal auf der zu reparierenden Oberfläche (1) aufgenommene Temperaturmesswerte zu liefern,
-) eine Quelle (14) elektrischer Energie, die den elektrischen Strom erzeugt, der zu dem mindestens ein elektromagnetisches Feld (3) erzeugenden Element geleitet wird,
-) ein Suszeptor-Heizelement (4), das ein "Suszeptor"-Material enthält, das in der Lage ist, die elektromagnetische Energie zu absorbieren, die von dem mindestens ein elektromagnetisches Feld (3) erzeugenden Element erzeugt wird, und die absorbierte elektromagnetische Energie in Wärme umzuwandeln,
-) mindestens einen Flicken (2) aus einem Verbundwerkstoff, der dazu bestimmt ist, durch Polymerisation auf der zu reparierenden Oberfläche (1) befestigt zu werden,
**dadurch gekennzeichnet, dass** das das mindestens eine elektromagnetische Feld (3) erzeugende Element mindestens eine Mehrzahl von Induktionsspulen (13) umfasst, die auf einem gemeinsamen Träger (17) montiert sind, der in die Abdeckung (6) integriert und mit der Mehrzahl von Temperatursensoren (18) versehen ist, die auf dem Träger (17) verteilt sind, wobei die Vorrichtung Mittel (19) zum Regeln der Leistung der elektrischen Ströme umfasst, die die Induktionsspulen (13) individuell und selektiv mit einer individuellen elektrischen Leistung in Abhängigkeit von den von den Temperatursensoren (18) gelieferten Temperaturmesswerten versorgen.

2. Vorrichtung nach Anspruch 1,
**dadurch gekennzeichnet, dass** die Induktionsspulen (13) in Gruppen (22, 23) von Induktionsspulen (13) gruppiert sind, die auf dem Träger (17) verteilt sind, wobei mindestens ein Temperatursensor (18) einer Gruppe (22, 23) von Induktionsspulen (13) zugeordnet ist, die individuell mit einem elektrischen Strom gleicher Leistung von der einen zur anderen der Induktionsspulen (13) derselben Gruppe (22, 23) gemäß den Temperaturmessungen versorgt werden, die von dem mindestens einen dieser Gruppe zugeordneten Temperatursensor (18) geliefert werden.

3. Vorrichtung nach Anspruch 2,
**dadurch gekennzeichnet, dass** die Gruppen (22, 23) von Induktionsspulen (13) und die den Gruppen (22, 23) von Induktionsspulen (13) jeweils zugeordneten Temperaturfühler (18) zu mindestens einem Satz zusammengefasst sind, der jeweils eine zentrale Gruppe (22) von Induktionsspulen (13) und an die zentrale Gruppe (22) von Induktionsspulen (13) beidseitig angrenzende periphere Gruppen (23) von Induktionsspulen (13) umfasst.

4. Vorrichtung nach einem der Ansprüche 1 bis 3,
**dadurch gekennzeichnet, dass** die Induktionsspulen (13) auf dem Träger (17) verteilt sind, indem sie in einer versetzten Anordnung in der allgemeinen Ebene des Trägers (17) angeordnet sind.

5. Vorrichtung nach einem der Ansprüche 1 bis 4,
**dadurch gekennzeichnet, dass** der Durchmesser der Induktionsspulen (13) zwischen 25 mm und 50 mm beträgt.

6. Vorrichtung nach einem der Ansprüche 1 bis 5,
**dadurch gekennzeichnet, dass** der Träger (17) durch eine Folie aus elektrisch isolierendem Material gebildet ist, wobei die Folie die Temperaturfühler (18) trägt und eine elektronische Schaltung integriert, die die Induktionsspulen (13) und Leitungswege bildet, die für die Verbindung der Induktionsspulen (13) und der Temperaturfühler (18) mit den Regelmitteln (19) bestimmt sind.

7. Vorrichtung nach einem der Ansprüche 1 bis 5,
**dadurch gekennzeichnet, dass** der Träger (17) durch eine flexible Lage aus einer elektrisch isolierenden Harzmasse gebildet ist, in die die Induktionsspulen (13), die Temperatursensoren (18) und die elektrischen Leitungskabel eingebettet sind, wobei die Kabel für die Fernverbindung der Induktionsspulen (13) und der Temperatursensoren (18) mit den Regelmitteln (19) bestimmt sind.

8. Vorrichtung nach Anspruch 7,
**dadurch gekennzeichnet, dass** die Induktionsspulen (13) und die Kabel jeweils durch Drähte gebildet sind, die jeweils aus einzeln elektrisch isolierten und untereinander verflochtenen Litzen gebildet sind, wobei die Drähte geeignet sind, einen hochfrequenten elektrischen Strom zu führen.

9. Vorrichtung nach einem der Ansprüche 1 bis 8,
**dadurch gekennzeichnet, dass** das Suszeptor-Heizelement (4) ein gleichmäßig in seiner Masse verteiltes Suszeptormaterial aufweist.

10. Vorrichtung nach einem der Ansprüche 1 bis 9,
**dadurch gekennzeichnet, dass** das Suszeptor-Heizelement (4) eine Einweg-Verbrauchskomponente ist, die aus einem nicht gewebten Metallgitter (15) mit regelmäßigen Maschen gebildet ist, das in den Flicken (2) integriert ist und in der Lage ist, nach der Integration in die zu reparierende Oberfläche (1) eine elektrostatische Abschirmung zu bilden.

11. Vorrichtung nach einem der Ansprüche 1 bis 9,
**dadurch gekennzeichnet, dass** das Suszeptor-Heizelement (4) mittels leicht reversibler Befestigungsmittel abnehmbar auf dem Flicken angebracht ist, wobei das Suszeptor-Heizelement (4) gleichermaßen aus einem Metallgitter mit regelmäßigen Maschen, aus einem Substrat, das gleichmäßig in dem Substrat verteilte magnetische Partikel enthält, oder aus einer homogenen Metallplatte gebildet sein kann.

12. Vorrichtung nach Anspruch 11,
**dadurch gekennzeichnet, dass** das Suszeptor-Heizelement (4) aus einem Substrat gebildet ist, das als ein Blatt ausgebildet ist, welches das Suszeptormaterial gleichmäßig über eine der Hauptflächen des Blattes verteilt aufweist, wobei die andere Hauptfläche des Blattes mit einer Klebstoffbeschichtung versehen ist, die eine Befestigung des Blattes an dem Flicken (2) bewirkt und ein leichtes Entfernen des Blattes nach dem Befestigen des Flickens (2) auf der zu reparierenden Oberfläche (1) ermöglicht.

13. Vorrichtung nach einem der Ansprüche 1 bis 12,
**dadurch gekennzeichnet, dass** die Vorrichtung Mittel (20) zum Editieren von Informationen bezüglich der von den Temperatursensoren (18) gelieferten Messwerte und Mittel (21) zum Steuern des individuellen Betriebs der Induktionsspulen (13) durch einen Bediener als Ersatz für die Regelmittel (19) umfasst.

14. Vorrichtung nach einem der Ansprüche 1 bis 13,
**dadurch gekennzeichnet, dass** die Mittel zum flächigen Andrücken (7) Mittel vom Vakuumtyp sind, die einen an der Abdeckung (6) angebrachten Vakuumsack (8) und ein in die Abdeckung (6) integriertes Drainagegewebe (10) verbinden, wobei das Drainagegewebe (10) mit einem Unterdruckerzeuger (9) verbunden ist.

15. Verfahren zum Betreiben einer Vorrichtung nach einem der Ansprüche 1 bis 14,
**dadurch gekennzeichnet, dass** das Verfahren die folgenden Schritte umfasst:
-) durch einen Bediener, Anbringen des Flickens (2) auf der zu reparierenden Oberfläche (1) und der Abdeckung (6) in Überlagerung des Flickens (2) und der zu reparierenden Oberfläche (1), dann Anwenden der Mittel zum flächigen Andrücken (8, 9, 10), um die Abdeckung (6) zu zwingen, sich an die zu reparierende Oberfläche (1) anzuschmiegen,
-) Zuführen von elektrischem Strom zu jeder der Induktionsspulen (13) mit einem gleichen elektrischen Leistungssollwert und gleichzeitiges lokales Messen der Temperatur der zu reparierenden Oberfläche (1) mit Hilfe der Temperatursensoren (18), dann
-) selektives Zuführen von elektrischem Strom zu den Induktionsspulen (13) mit einer individuellen elektrischen Leistung, die von den Regelmitteln (19) in Abhängigkeit von mindestens einer Solltemperatur relativ zu der Temperatur, auf die die zu reparierende Oberfläche (1) gebracht werden soll, und in Abhängigkeit von den von jedem der Temperatursensoren (18) gelieferten Messwerten geregelt wird, bis die Polymerisation und Befestigung des Flickens (2) auf der zu reparierenden Oberfläche (1) erreicht ist,
-) Entfernen der Abdeckung (6) nach dem Befestigen des Flickens (2) auf der zu reparierenden Oberfläche (1).

## Claims

1. Apparatus for heat treatment of a surface (1) to be repaired that is made from a composite material, said apparatus comprising:
-) a cover (6) fitted with means (7) for pressing the cover (6) such that it abuts the surface (1) to be repaired, the cover (6) incorporating a member that generates at least one electromagnetic field (3) when an electric current flows through it and a plurality of temperature sensors (18), each of which is capable of providing respective measurements of the temperature taken locally on the surface (1) to be repaired,
-) a source (14) of electrical energy that generates said electric current which is delivered to said member that generates at least one electromagnetic field (3),
-) a susceptor heating member (4) in which a "susceptor" material is integrated, which material is capable of absorbing the electromagnetic energy generated by the member that generates at least one electromagnetic field (3) and of converting the absorbed electromagnetic energy into heat,
-) at least one seal (2) made from a composite material and intended for being sealed by polymerisation on the surface (1) to be repaired,
**characterised in that** the member that generates said at least one electromagnetic field (3) comprises at least a plurality of inductive coils (13) arranged on a common support (17) that is integrated in the cover (6) and is provided with said plurality of temperature sensors (18) distributed on the support (17), the apparatus comprising means (19) for regulating the power of said electric currents which supply the inductive coils (13) individually and selectively with an individual electrical power according to the temperature measurements provided by the temperature sensors (18).

2. Apparatus according to claim 1, **characterised in that** the inductive coils (13) are arranged in groups (22, 23) of inductive coils (13) distributed on the support (17), at least one temperature sensor (18) being assigned to a group (22, 23) of inductive coils (13) which are individually supplied with an electric current of the same power as the other inductive coils (13) in the same group (22, 23) according to the temperature measurements provided by said at least one temperature sensor (18) assigned to said same group (22, 23).

3. Apparatus according to claim 2, **characterised in that** the groups (22, 23) of inductive coils (13) and the temperature sensors (18) respectively assigned to the groups (22, 23) of inductive coils (13) are arranged in at least one batch comprising a central group (22) of inductive coils (13) and peripheral groups (23) of inductive coils (13) which border the central group (22) of inductive coils (13) respectively at each side thereof.

4. Apparatus according to any of claims 1 to 3, **characterised in that** the inductive coils (13) are distributed on the support (17) so as to be staggered in the general plane of the support (17).

5. Apparatus according to any of claims 1 to 4, **characterised in that** the diameter of the inductive coils (13) is between 25 mm and 50 mm.

6. Apparatus according to any of claims 1 to 5, **characterised in that** the support (17) consists of a film made of electrically insulating material, the film carrying said temperature sensors (18), and an electronic circuit that forms the inductive coils (13) and conduction paths for connecting the inductive coils (13) and the temperature sensors (18) to the regulating means (19) being integrated in said film.

7. Apparatus according to any of claims 1 to 5, **characterised in that** the support (17) consists of a flexible web formed by a mass of electrically insulating resin, in which mass of resin the inductive coils (13), the temperature sensors (18) and electrical conduction cables are embedded, said cables being intended for remotely connecting the inductive coils (13) and the temperature sensors (18) to the regulation means (19).

8. Apparatus according to claim 7, **characterised in that** the inductive coils (13) and the cables are each formed by wires that are each made up of strands which are individually electrically insulated and braided together, the wires being capable of delivering a highfrequency electric current.

9. Apparatus according to any of claims 1 to 8, **characterised in that** a susceptor material that is evenly distributed in the mass of the susceptor heating member is integrated in the susceptor heating member (4).

10. Apparatus according to any of claims 1 to 9, **characterised in that** the susceptor heating member (4) is a single-use consumable component formed by a non-woven metal grid (15) that has an even mesh, is integrated in the seal (2) and is capable of forming an electrostatic shield after being integrated in the surface (1) to be repaired.

11. Apparatus according to any of claims 1 to 9, **characterised in that** the susceptor heating member (4) is detachably mounted on the seal by easily reversible fixing means, the susceptor heating member (4) being formed either by a metal grid that has an even mesh, by a substrate in which magnetic particles are integrated so as to be equitably distributed in the substrate or by a homogeneous metal plate.

12. Apparatus according to claim 11, **characterised in that** the susceptor heating member (4) is formed by a substrate arranged in a sheet in which the susceptor material is integrated, which material is equally distributed on one of the large surfaces of the sheet, the other large surface of the sheet being provided with an adhesive coating that fixes the sheet on the seal (2) and allows easy removal of the sheet after the seal (2) has been sealed on the surface (1) to be repaired.

13. Apparatus according to any of claims 1 to 12, **characterised in that** the apparatus comprises means (20) for editing information relating to the measurements provided by the temperature sensors (18) and means (21) for control, by an operator, of the individual use of the inductive coils (13) as a substitute for the regulation means (19).

14. Apparatus according to any of claims 1 to 13, **characterised in that** the pressing means (7) are vacuum-type means that combine a vacuum bag (8) fitted to the cover (6) and a drainage fabric (10) integrated in the cover (6), the drainage fabric (10) being in communication with a vacuum generator (9).

15. Method for using an apparatus according to any of claims 1 to 14, **characterised in that** the method comprises the following processes:
-) an operator placing the seal (2) on the surface (1) to be repaired and placing the cover (6) on top of the seal (2) and the surface (1) to be repaired, then using the pressing means (8, 9, 10) to force the cover (6) to mould to the surface (1) to be repaired,
-) supplying electric current to each of the inductive coils (13) at a same set electrical power and simultaneously locally measuring the temperature of the surface (1) to be repaired by means of temperature sensors (18), and then
-) selectively supplying electric current to the inductive coils (13) at an individual electrical power regulated by the regulating means (19) according to at least one set temperature relating to the temperature to which the surface (1) to be repaired must be brought and according to the measurements provided by each of the temperature sensors (18) until polymerisation has been achieved and the seal (2) has been sealed on the surface (1) to be repaired.
-) removing the cover (6) after the seal (2) has been sealed on the surface (1) to be repaired.
